# EUROPÄISCHE PATENTANMELDUNG

(11) **EP 0 621 523 A2**
(43) Veröffentlichungstag der Anmeldung: **26.10.1994**
(21) Anmeldenummer: 94105850.5
(22) Anmeldetag: 15.04.1994
(51) Int. Cl.: G05D 7/06, F04B 49/06

(54) **Verfahren zur Erzeugung von hochpräzischen Volumenströmen bei geringer Flussrate und Vorrichtung zur Durchführung des Verfahrens**

(30) Priorität: 21.04.1993 DE 4312995
(71) Anmelder: GSF-Forschungszentrum für Umwelt und Gesundheit, GmbH, D-85764 Oberschleissheim (DE)
(72) Erfinder: Schmidt, Karl-Heinz, D-83620 Feldkirchen-Westerham (DE); Menache, Georg, Dr., D-80995 München (DE); Frisch, Heinz, D-85757 Karlsfeld (DE)

(57) **Zusammenfassung**

Die Erfindung betrifft ein Verfahren und eine Vorrichtung zur Erzeugung von hochpräzisen Volumenströmen bei geringer Flußrate.

Aufgabe der Erfindung ist es, ein Verfahren und eine Vorrichtung zur Verfügung zu stellen, mit der ein kontinuierlicher Volumenstrom erzeugt werden kann.

Gelöst wird diese Aufgabe durch zwei parallele Kolbenpumpen welche über zwei Ventile getrennt voneinander beschickt werden können, zwei Ventile, welche die wechselseitige Beschickung einer gemeinsamen Ausgangsleitung durch die beiden Kolbenpumpen erlauben und zwei Differenzdruckmesser zur Erfassung des Differenzdrucks über den beiden Ventilen.

## Beschreibung

Die Erfindung betrifft ein Verfahren zur Erzeugung von hochpräzisen Volumenströmen bei geringer Flußrate und eine Vorrichtung zur Durchführung des Verfahrens.

Hochgenaue Volumenströme werden insbesondere für die Bestimmung von Dampfdrücken verwendet. Das Problem hierbei liegt darin, kontinuierliche geringe Durchflußraten genau zu bestimmen bzw. zu erzeugen. Die bisherigen Methoden die z. B. die Abkühlung eines aufgeheizetn Drahtes im Volumenstrom auszuwerten sind temperaturabhängig und für geringe Durchflußraten sowie für Flüssigkeiten nicht geeignet.

Betrachtet man, welche Größen man in der Physik genau bestimmen kann, dann sind Längen und Zeiten die Größen die man bisher am genauesten bestimmen kann. Diese Größen sind Grundlage für die Messung des Volumenstroms.

Das bedeutet, daß man mit einem Zylinder und einem Kolben bei genauer Bestimmung des Zylinderdurchmessers und der Kolbengeschwindigkeit den Volumenstrom sehr genau einstellen kann. Leider ist dieses Verfahren für die Herstellung eines kontinuierlichen Volumenstromes nicht geeignet.

Die Aufgabe der Erfindung ist es, ein Verfahren und eine Vorrichtung der e. g. Art zur Verfügung zu stellen, mit der ein kontinuierlicher Volumenstrom erzeugt werden kann.

Die Aufgabe wird durch die Merkmale der Ansprüche 1 und 2 gelöst.

Der Anspruch 3 beschreibt eine vorteilhafte Ausgestaltung der Vorrichtung. Die Ansprüche 4 und 5 zeigen die Verwendungsmöglichkeiten der Vorrichtung.

Verfahren und Vorrichtung sind besonders zur Erzeugung von Gasströmen geeignet.

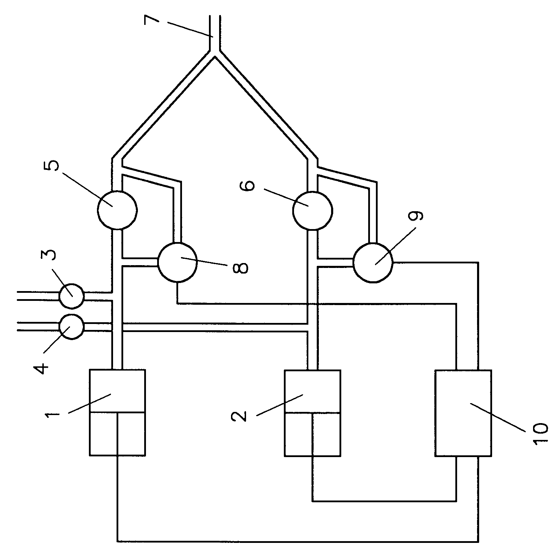

Die Erfindung wird im folgenden anhand eines Ausführungsbeispiels mit Hilfe der Figur näher erläutert.

Die Figur zeigt zwei parallele Kolbenpumpen 1, 2 welche über zwei Ventile 3, 4 getrennt voneinander beschickt werden können, zwei Ventile 5, 6, welche die wechselseitige Beschickung eines gemeinsamen Ausgangsleitung 7 durch die beiden Kolbenpumpen 1, 2 erlauben und zwei Differenzdruckmesser 8, 9 zur Erfassung des Differenzdrucks über den beinen Ventilen 5, 6 sowie eine Steuereinheit 10, welche die Kolben der Pumpen 1, 2 sowie die Ventile 3, 4 und 5, 6 steuert und die Meßwerte der Differenzdruckmesser 8, 9 erfaßt.

Die zwei Kolbenpumpen 1 und 2 sind so miteinander verbunden, daß jeweils eine Pumpe den Volumenstrom G2 abgibt und die andere mit dem abzugebenden Material G1 aufgeladen wird.

Der kontinuierliche Übergang vom Volumenstrom der einen Pumpe zum Volumenstron der anderen Pumpe wird durch folgenden Ablaufsteuerung erzielt.

Ist die z. B. Pumpe 1 durch das Ventil 3 aufgeladen, dann wird es durch den Mikroprozessor 10 geschlossen, die Ventile 4 und 5 sind geschlossen. Das Ventil 6 ist geöffnet und die Pumpe 2 gibt bei konstaner Kolbengeschwindigkeit einen konstanten Volumenstrom so lange ab, bis sich ihr Kolben auf dem letzten Stück des Kolbenhubs befindet.

Dann wird der Kolben der Pumpe 1 in die Position gebracht, daß der Differenzdrucksensor 8 dieselbe Druckdifferenz anzeigt wie der Differenzdrucksensor 9. Jetzt wird Ventil 5 geöffnet und der Kolben der vollen Pumpe 1 durch den Mikroprozessor 10 so beschleunigt sowie der Kolben der leer werdenden Pumpe 2 durch den Mikroprozessor M so verzögert, daß die Summe der Geschwindigkeiten der Kolben von Pumpe 1 und Pumpe 2 gleich ist.

Wenn die Pumpen unterschiedliche Förderquerschnitte haben, müssen die Fördergeschwindigkeiten der beiden Pumpen entsprechend aneinander angepaßt werden.

Ist die Geschwindigkeit des Kolbens der Pumpe 2 null, dann wird Ventil 6 geschlossen und Ventil 4 geöffnet. Der Kolben der Pumpe 2 wird jetzt über den Mikroprozessor 10 zurückgezogen, wobei über Ventil 4 neues Gas in die Pumpe 2 strömt.

Der Kolben der Pumpe 1 wird währenddessen mit konstanter Geschwindigkeit kontinuierlich in die Pumpe 1 hineingeschoben.

Befindet sich der Kolben der Pumpe 1 im letzten Teil des Kolbenweges, dann wiederholt sich der o. g. Zyklus mit der anderen Pumpe usw., wobei die Position von Pumpen und Ventilen gegeneinander ausgetauscht werden.

Der konstante Volumenstrom stellt sich erst nach mehreren Zyklen ein.

Die Vorrichtung läßt sich sehr vorteilhaft in der chemischen Analytik und bei der Bestimmung von Dampfdrücken nach der Gasättigungsmethode einsetzen, da in diesen Fällen eine genaue Bestimmung des in einem Zeitabschnitts durchgeströmten Gasvolumens von großer Bedeutung ist. In der chemischen Analytik wird das Gasvolumen zur exakten Bestimmung der Gasmenge die bei einer chemischen Reaktion zugeführt wird, benötigt.

Insbesondere bei der Bestimmung von Dampfdrücken nach der Gassättigungsmethode, bei der über eine Probe Stickstoffgas geleitet wird, stellt sich das Problem, daß bei hohen Temperaturen sehr kleine Volumenströme hoher Genauigkeit benötigt werden, da infolge des mit der Temperatur exponentiell ansteigenden Dampfdrucks sich bereits in kleinen Volumen große Mengen verdampften Materials befinden.

Vorteilhaft bei dem angegebenen Verfahren kommt hinzu, daß der Volumenstrom gegenüber den gängigen Verfahren keinen Offsetfehler aufweist.

## Patentansprüche

1. Verfahren zur Erzeugung von hochpräzisen Volumenströmen bei geringer Flußrate mit folgenden Verfahrensschritten:
a) Befüllen einer Kolbenpumpe 1 von zwei Kolbenpumpen 1,2, welche die wechselseitige Beschickung einer gemeinsamen Ausgangsleitung 7 erlauben,
b) Entleeren der Pumpe 1, welche bei konstaner Kolbengeschwindigkeit einen konstanten Volumenstrom abgibt, bei gleichzeitiger Befüllung der anderen Kolbenpumpe 2, solange bis sich ihr Kolben auf dem letzten Stück des Kolbenhubs befindet,
c) dann wird der Kolben der Pumpe 2 in eine Position gebracht, bei der der Druck im Innern der Pumpe 2 so groß ist wie in der Ausgangsleitung 7,
d) Entleeren der Pumpe 2, wobei der Kolben der vollen Pumpe 2 so beschleunigt und der Kolben der leer werdenden Pumpe 1 so verzögert wird, daß die Summe der Geschwindigkeiten der Kolben von Pumpe 1 und Pumpe 2 gleich ist, so lange bis der Kolben der Pumpe 1 seine Endposition erreicht hat, dann folgen die Schritte ab b), wobei die Bezugszeichen der Pumpen zu vertauschen sind.

2. Vorrichtung zur Durchführung des Verfahrens gemäß Patentanspruch 1, gekennzeichnet durch:
a) Zwei parallele, getrennt ansteuerbare Kolbenpumpen (1, 2) welche über zwei Ventile (3, 4) getrennt voneinander beschickt werden können,
b) zwei Ventile (5, 6), welche die wechselseitige Beschickung einer gemeinsamen Ausgangsleitung (7) durch die beiden Kolbenpumpen (1, 2) erlauben und
c) zwei Differenzdruckmesser (8, 9) zur Erfassung des Differenzdrucks über den beinen Ventilen (5, 6).

3. Vorrichtung nach Anspruch 2, gekennzeichnet durch eine Steuereinheit (10), welche die Kolben der Pumpen (1, 2) sowie die Ventile (3, 4) und (5, 6) steuert und die Meßwerte der Differenzdruckmesser (8, 9) erfaßt.

4. Verwendung der Vorrichtung nach Anspruch 2 oder 3 zur Dampfdruckbestimmung nach der Gassättigugsmethode.

5. Verwendung der Vorrichtung nach Anspruch 2 oder 3 in der chemischen Anlalytik.
